# EUROPÄISCHE PATENTSCHRIFT

(11) **EP 1 586 183 B1**
(45) Veröffentlichungstag und Bekanntmachung des Hinweises auf die Patenterteilung: **22.11.2006**
(21) Anmeldenummer: 03782441.4
(22) Anmeldetag: 18.12.2003
(51) Int. Cl.: H04L 27/12

(54) **OSZILLATORANORDNUNG FÜR FREQUENZMODULATION**
OSCILLATOR DEVICE FOR FREQUENCY MODULATION
ENSEMBLE OSCILLATEUR UTILISE A DES FINS DE MODULATION DE FREQUENCE

(30) Priorität: 22.01.2003 DE 10302391
(43) Veröffentlichungstag der Anmeldung: 19.10.2005
(73) Patentinhaber: austriamicrosystems AG, 8141 Unterpremstätten (AT)
(72) Erfinder: HOFER, Günter, A-8113 St. Oswald (AT)
(74) Vertreter: Epping - Hermann - Fischer
(86) Internationale Anmeldenummer: PCT/EP2003/014461
(87) Internationale Veröffentlichungsnummer: WO 2004/066578

(56) Entgegenhaltungen:
- US-A- 2 874 216
- US-A- 3 641 460

## Beschreibung

Die vorliegende Erfindung betrifft eine Oszillatoranordnung, die für eine Frequenzmodulation ausgelegt ist.

Unter den digitalen Modulationsverfahren ist die Frequenzumtastung, englisch: frequency shift keying, FSK, neben der Amplitudenumtastung und der Phasenumtastung sowie Kombinationen der genannten Verfahren, eine verbreitete Methode zur digitalen Modulation eines Trägersignals.

Eine Möglichkeit, ein Trägersignal mit einer Frequenzumtastung zu beaufschlagen, besteht darin, das Trägersignal unmittelbar bei seiner Erzeugung im Oszillator zu modulieren.

Dabei wird die Frequenzumtastung des Oszillators üblicherweise dadurch erreicht, daß kleine, frequenzbestimmende Kapazitäten zu einem im Oszillator gebildeten Schwingkreis hinzu- oder weggeschaltet werden. Hierdurch wird das digitale Modulationssignal mit dem gewünschten Frequenzhub auf den Träger aufmoduliert.

Der Oszillator kann dabei beispielsweise als Quarzoszillator oder als LC-Oszillator ausgeführt sein. Während bei einem Quarzoszillator die Schwingfrequenz hauptsächlich durch die Schwingfrequenz des Quarzes bestimmt wird, beeinflussen beim LC-Oszillator zumindest eine Induktivität und zumindest eine Kapazität die Schwingfrequenz.

Um beispielsweise einen Frequenzhub von 60 KHz zu erzeugen, müssen jedoch verhältnismäßig große Kapazitäten in dem sogenannten Oszillator-Tank zu- und weggeschaltet werden. Das Schalten von Kapazitäten jedoch bringt jedoch stets Probleme bezüglich Ladungsinjektionen mit sich. Es werden unerwünschte Interferenzen sowohl in die Stromversorgung des Oszillators, als auch in den Substratanschluß eines integrierten Oszillators hineingetragen. Die Ladungen bewirken eine Störbeeinflussung des Oszillators, beispielsweise eines spannungsgesteuerten Oszillators, und beeinflussen auch dessen Ausgangsspektrum in störender Weise. Außerdem ist ein verhältnismäßig großer Chipflächenbedarf zum Integrieren der zuschaltbaren Kapazitäten nötig.

Das Dokument US 2,874,216 betrifft ein automatisches Signalsteuersystem.

Aufgabe der vorliegenden Erfindung ist es, eine Oszillatoranordnung anzugeben, die für eine Modulation gemäß einem Frequenzumtastungsverfahren geeignet ist und bei der durch Ladungsinjektion bedingte Probleme vermieden oder signifikant verringert sind.

Erfindungsgemäß wird die Aufgabe gelöst durch eine Oszillatoranordnung für Frequenzmodulation, aufweisend
- einen Steuereingang zum Zuführen eines Modulationssignals,
- einen Oszillatorausgang zum Abgreifen eines frequenzmodulierten Signals,
- einen Oszillator mit einem Eingang zur Zuführung eines Speisestroms und mit dem Oszillatorausgang,
- einen Regelkreis zur Amplitudenregelung mit einem Eingang, der an den Oszillatorausgang angeschlossen ist und mit einem Ausgang, der mit dem Eingang zur Zuführung eines Speisestroms des Oszillators verbunden ist, und
- ein Mittel zur Beeinflussung des Speisestroms in Abhängigkeit von dem Modulationssignal, das in dem Regelkreis angeordnet und mit dem Eingang des Oszillators zur Zuführung eines Speisestroms gekoppelt ist.

Gemäß dem vorgeschlagenen Prinzip wird die bei einem gesteuerten Oszillator mit Frequenzmodulation normalerweise ohnehin meist vorhandene, automatische Amplitudenregelung dazu mitbenutzt, um den Betriebsstrom des Oszillators zu steuern und damit auch die Oszillatorfrequenz in gewünschter Weise zu beeinflussen, das heißt zu modulieren. Der Oszillator wird demnach dadurch moduliert, daß die Schleifenverstärkung der Verstärkungsregelungsschleife durch Beeinflussen des Speisestroms des Oszillators gesteuert wird.

Bevorzugt wird der Amplitudenregelkreis dazu mitbenutzt, den sogenannten Basisstrom des Oszillators mittels durch das Modulationssignal gesteuerte Stromabzugstechnik zu verändern und damit auch die Frequenz in kleinen Schritten zu verändern.

Das vorgeschlagene Prinzip ist unter anderem sowohl bei LC-Oszillatoren als auch bei Quarz-Oszillatoren mit Vorteil anwendbar.

Bei dem vorgeschlagenen Prinzip kann vollständig auf umschaltbare Kapazitäten zur Frequenzumtastung verzichtet werden. Dadurch ist das Problem der Ladungsinjektion vermieden, es treten keine unerwünschten Rückwirkungen auf die Stromversorgung auf und zusätzlich ist die Schaltung ist mit besonders geringem Chipflächenbedarf realisierbar. Außerdem kann die Ansteuerung des Mittels zur Beeinflussung des Speisestroms in Abhängigkeit von dem Modulationssignal mit einem einfach aufgebauten Steuerblock realisiert werden.

Das Mittel zur Beeinflussung des Speisestroms umfaßt bevorzugt mehrere, bezüglich ihrer geschalteten Strecken parallel geschaltete Stromschalter. Abhängig vom Modulationssignal werden die parallel geschalteten Stromschalter dabei bevorzugt so angesteuert, daß gerade der zur gewünschten Frequenzverstimmung nötige Strom abgezogen wird.

Die parallel geschalteten Stromschalter sind bevorzugt ausgangsseitig in einem Stromspiegel angeordnet. Dabei bilden bevorzugt je ein Transistor des Stromspiegels und ein diesem zugeordneter Schalter eine Serienschaltung. Die Serienschaltungen sind dabei zueinander parallelgeschaltet. Die Schalter können unabhängig voneinander zu- und abgeschaltet werden. Durch Steuern der Schleifenverstärkung der automatischen Regelschleife mittels entsprechender Ansteuerung der Stromschalter kann mit Vorteil in einfacher Weise die Frequenz des Oszillators durch Stromsteuerung moduliert werden.

Der Stromspiegel mit den parallel geschalteten Stromschaltern wirkt bevorzugt auf einen weiteren Stromspiegel, der eine Speisestromquelle zum Speisen des Oszillators mit dem Oszillator koppelt. Der Schaltungsknoten, an dem der Stromspiegel mit den Stromschaltern in die Speisestromzuführung des Oszillators eingreift, ist dabei bevorzugt an dem gemeinsamen Gate-Anschluß bzw. Basis-Anschluß der Stromspiegeltransistoren im weiteren Stromspiegel vorgesehen. Dadurch wird in Abhängigkeit von dem Modulationssignal ein Teil des von der Konstantstromquelle bereitgestellten Stroms mit den Stromschaltern abgezogen und somit die Oszillatorfrequenz moduliert.

Zur Ansteuerung der Stromschalter ist bevorzugt ein Steuerblock vorgesehen mit einem Eingang, an dem das Modulationssignal zugeführt wird und mit einem oder mehreren Ausgängen, die mit jeweiligen Steueranschlüssen der zugeordneten Stromschalter verbunden sind.

Das Modulationssignal ist bevorzugt ein digital codiertes Signal, welches gemäß einem Frequenzumtastungsverfahren, englisch: frequency shift keying, FSK, codiert ist.

Der Oszillator ist bevorzugt abstimmbar ausgeführt mit einem weiteren Steuereingang, an dem ein Abstimmsignal zuführbar ist und mit einer Schwingfrequenz-bestimmenden Kapazität, die in Abhängigkeit von dem Abstimmsignal gesteuert wird. Derartige, abstimmbare Kapazitäten sind bevorzugt als Varaktordioden ausgeführt. Somit ist ein spannungsgesteuerter Oszillator, englisch: voltage controlled oszillator, VCO realisiert.

Weitere Einzelheiten und vorteilhafte Ausgestaltungen des vorgeschlagenen Prinzips sind Gegenstand der Unteransprüche.

Die Erfindung wird nachfolgend an mehreren Ausführungsbeispielen anhand der Zeichnungen näher erläutert.

Es zeigen:
- Figur 1: ein Blockschaltbild einer beispielhaften Oszillatoranordnung für Frequenzmodulation gemäß dem vorgeschlagenen Prinzip,
- Figur 2: eine Weiterbildung der Oszillatoranordnung von Figur 1, ausgelegt für einen Quarzoszillator,
- Figur 3: ein weiteres Ausführungsbeispiel einer Oszillatoranordnung gemäß Figur 1 mit LC-Oszillator und
- Figur 4: die Resonanzfrequenz in Abhängigkeit der Schleifenverstärkung der Amplitudenregelung anhand eines S-Parameter-Diagramms bei einem Quarzoszillator gemäß Figur 2.

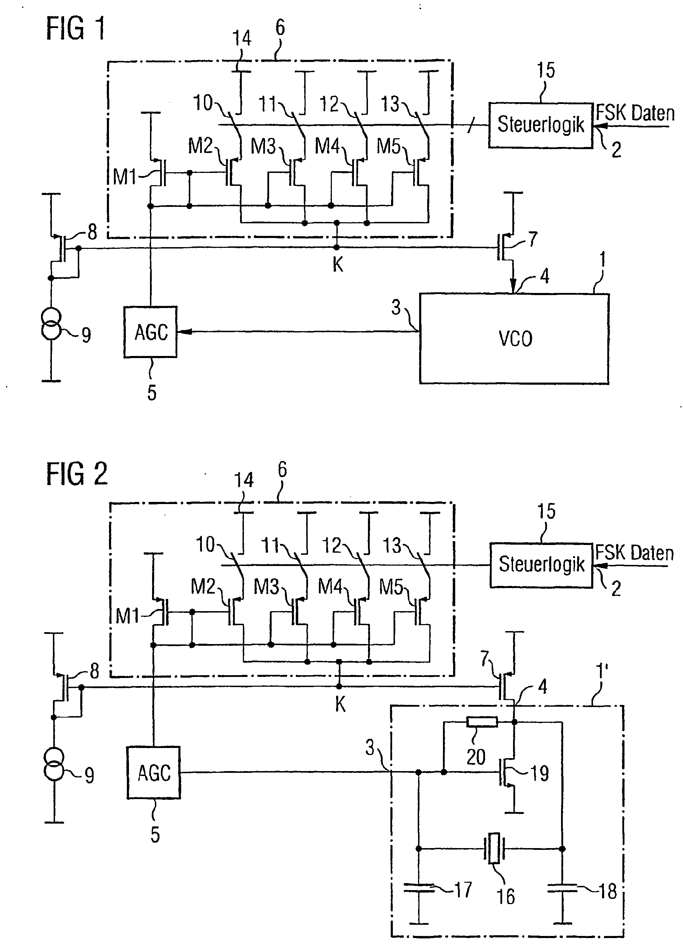

Figur 1 zeigt eine Oszillatoranordnung ausgelegt für Frequenzmodulation. Diese umfaßt einen Oszillator 1 sowie einen Steuereingang 2 zum Zuführen eines Modulationssignals. Der Oszillator 1 hat einen Ausgang 3, an dem ein frequenzmoduliertes Signal abgreifbar ist. Außerdem weist der Oszillator 1 einen Eingang 4 zum Zuführen eines Speisestroms auf. Der Speisestrom wird unter anderem zur Entdämpfung des Schwingkreises benutzt, der in dem Oszillator 1 gebildet ist. Der Speisestrom wird auch als Basisstrom oder tail current bezeichnet. Um die Stabilität des Oszillators zu gewährleisten, ist dieser in einem Amplitudenregelkreis angeordnet. Der Regelkreis zur Amplitudenregelung umfaßt einen AGC-Block 5, einen ersten Stromspiegel 6 und einen zweiten Stromspiegel 7, 8. Der Ausgang des ersten Stromspiegels 6 steuert einen Stromquellentransistor 7 an, der an seinem Stromquellenausgang mit dem Speisestromeingang 4 des Oszillators 1 verbunden ist. Eine Transistordiode 8 bildet mit dem Stromquellentransistor 7 den zweiten Stromspiegel. Der gemeinsame Gate-Anschluß der Transistoren 7, 8, der mit dem Ausgang des ersten Stromspiegels 6 verbunden ist, ist als Schaltungsknoten K bezeichnet. Der Eingang des zweiten Stromspiegels 7, 8 ist an eine Stromquelle 9 angeschlossen, die einen Bezugsstrom für den Oszillator 1 bereitstellt. Der Stromspiegel 6 umfaßt eine Transistordiode M1 sowie ausgangsseitig insgesamt vier parallel geschaltete Stromspiegeltransistoren M2, M3, M4, M5, welche unabhängig voneinander zu- und abschaltbar sind. Hierfür ist je ein Schalter 10, 11, 12, 13 vorgesehen, der jeweils einen Bezugspotentialanschluß 14 mit einem Lastanschluß der gesteuerten Strecken des zugeordneten Transistors M2, M3, M4, M5 verbindet, vorliegend mit deren Source-Anschluß. Dabei sind die Gate-Anschlüsse der Feldeffekttransistoren M1 bis M5 im Stromspiegel 6 unmittelbar miteinander verbunden. Damit der Transistor M1 als Diode arbeitet, ist dessen Gate-Anschluß mit seinem Drain-Anschluß unmittelbar verbunden. Der Source-Anschluß des n-Kanal-Feldeffekttransistors M1 ist an Bezugspotentialanschluß 14 angeschlossen. Die Drain-Anschlüsse der Transistoren M2 bis M5 sind unmittelbar miteinander verbunden in dem Schaltungsknoten K und bilden den Ausgang des Stromspiegels 6. Der Schaltungsknoten K ist unmittelbar an die Gate-Anschlüsse der Stromspiegeltransistoren 7, 8 angeschlossen.

Die Schalter 10, 11, 12, 13, die als Stromschalter ausgelegt sind, werden gesteuert durch eine Steuerlogik, die in einem entsprechenden Steuerblock 15 vorgesehen ist, dessen Eingang den Steuereingang 2 zum Zuführen eines Modulationssignals der Oszillatoranordnung bildet und dessen Ausgang mit den Steueranschlüssen der Schalter 10, 11, 12, 13 verbunden ist.

Ein eventuell vorhandener Abstimmeingang des spannungsgesteuerten Oszillators 1 ist in Figur 1 nicht dargestellt.

Die Besonderheit der Schaltung gemäß Figur 1 ist es, daß die Modulationsdaten nicht unmittelbar im Oszillatorkern vorgesehene schaltbare Kapazitäten steuern, welche somit die Schwingfrequenz des Oszillators beeinflussen, sondern daß die Modulationsdaten in die Amplitudenregelung des Oszillators 1 eingreifen. Die Oszillatorfrequenz wird dabei indirekt über die Steuerung des Speisestroms des Oszillators, englisch tail current, umgetastet. Der Amplitudenregelkreis 5, 6, 7 umfaßt schaltbare Stromspiegel, mit denen die Frequenz des Oszillators verstellt werden kann. Das Modulationssignal steuert demnach die Schleifenverstärkung des Amplitudenregelkreises 5, 6, 7. Mit den Stromschaltern wird die Frequenzumsteuerung des Oszillators 1 dabei in einer Stromabzugstechnik realisiert. Somit kann mit Vorteil auf umschaltbare Kapazitäten zur Frequenzumtastung im Oszillator verzichtet werden. Damit sind Vorteile erzielt bezüglich Ladungsinjektion, Rückwirkungen auf die Leistungsversorgung, einfacher Ansteuerung und Chipfläche.

Figur 2 zeigt ein weiteres Ausführungsbeispiel der vorliegenden Oszillatoranordnung, welche einen als Quarzoszillator 1' realisierten Oszillator aufweist. Die Amplitudenregelung einschließlich der schaltbaren Stromquellen im Amplitudenregelkreis und deren Ansteuerung mit dem Modulationssignal entsprechen denjenigen von Figur 1. Insoweit wird deren Beschreibung nicht wiederholt. Der Oszillator 1' bei Figur 2 ist als Quarzoszillator ausgeführt und umfaßt einen Schwingquarz 16. Beide Anschlüsse des Schwingquarzes 16 sind über je einen Kondensator 17, 18 mit Bezugspotential verbunden. Zur Entdämpfung des schwingfähigen Systems ist ein Verstärker vorgesehen, der einen p-Kanal-Feldeffekttransistor 19 umfaßt. Der Gate-Anschluß des Transistors 19, an dem zugleich der Ausgang 3 des Oszillators gebildet ist, ist mit einem der beiden Anschlüsse des Quarzes 16 verbunden. Der Source-Anschluß des Transistors 19 ist auf Bezugspotential gelegt. Der Drain-Anschluß des Transistors 19, der den Eingang zur Zuführung eines Speisestroms 4 des Oszillators 1' bildet, ist zum einen über einen Widerstand 20 mit dem Gate-Anschluß des Transistors 19 verbunden und zum anderen mit dem weiteren Anschluß des Quarzes 16 verbunden. Bei der Schaltung von Figur 2 ist ein Frequenzhub möglich von 10 KHz bis 100 KHz durch entsprechendes Schalten der Stromschalter 10, 11, 12, 13 in Abhängigkeit vom Modulationssignal. Die Datenrate kann zwischen 0 und 20 kBit/sec betragen. Um eine Selbstmischung zu vermeiden, sollte die Zeitkonstante der Amplitudenregelung des Amplitudenregelkreises 5, 6, 7 deutlich kleiner eingestellt werden als die Zeitkonstante des Oszillators. Bei dem vorliegenden Quarzoszillator wird die Frequenz über den Strom und in weiterer Folge über die sich einstellende Amplitude verändert. Durch Verwendung einer Amplitudenregelung kann mittels digital gesteuerter Stromabzugstechnik der Oszillator-Basisstrom und damit auch die Frequenz verändert werden. Bei Frequenzhüben von bis zu plus minus 100 KHz treten lediglich geringe Ladungsverschiebungen auf. Mit anwendungsabhängiger Gewichtung der Transistoren M1 bis M5 kann praktisch jeder beliebige, gewünschte Frequenzhub innerhalb der beschriebenen Grenzen eingestellt werden.

Gemäß dem vorgeschlagenen Prinzip tritt keine Ladungsinjektion auf, unerwünschte Rückwirkungen von Störsignalen auf die Stromversorgung werden vermieden, die Schaltungen sind auf verhältnismäßig geringer Chipfläche integrierbar und die Ansteuerung der Stromschalter kann mit einer besonders einfach aufgebauten Steuerlogik 15 realisiert werden.

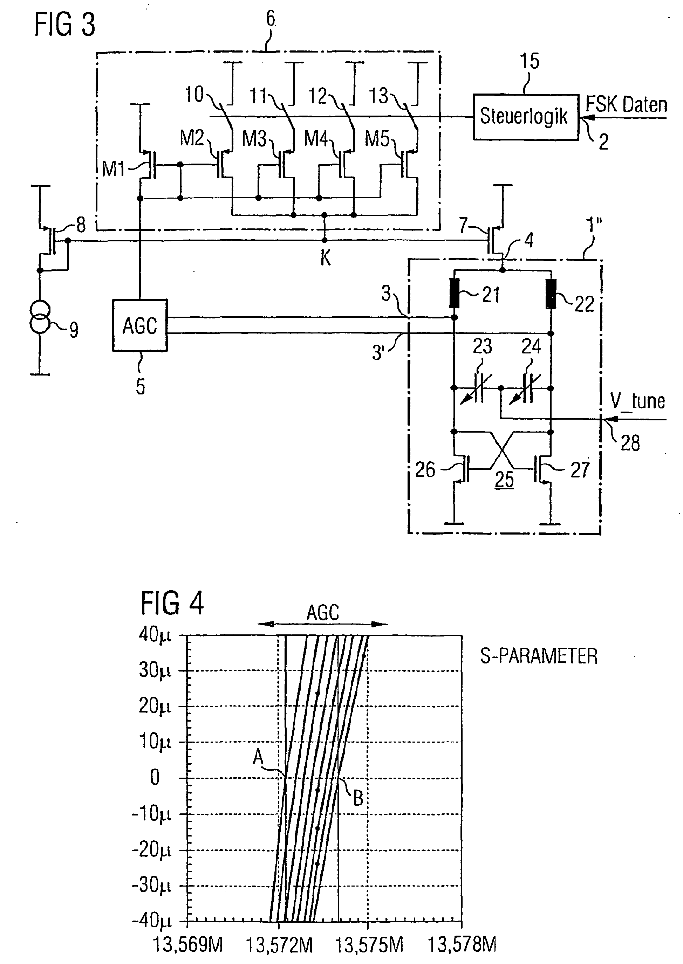

Figur 3 zeigt ein Ausführungsbeispiel des vorgeschlagenen Prinzips angewendet auf einen LC-Oszillator 1". Abgesehen von der Ausführungsform des Oszillators 1" entspricht der Aufbau der Oszillatoranordnung von Figur 3 in den verwendeten Bauteilen, deren Verschaltung miteinander und der vorteilhaften Funktionsweise weitestgehend derjenigen von Figur 1 und wird an dieser Stelle soweit nicht noch einmal wiederholt. Der Oszillator 1" ist als abstimmbarer LC-Schwingkreis ausgeführt. Als solcher umfaßt er zwei Festwert-Induktivitäten 21, 22, zwei abstimmbare Kapazitäten 23, 24 und einen Entdämpfungsverstärker 25, welcher zwei kreuzgekoppelte p-Kanal-Transistoren 26, 27 umfaßt. Die Induktivitäten 21, 22 verbinden den Speisestromeingang 4 des Oszillators 1" mit dem Ausgangsklemmenpaar 3, 3' des Oszillators 1". Der Abstimmeingang 28 des Oszillators, an dem ein Tuningsignal zuführbar ist, ist über je einen Varaktor 23, 24 an die Ausgangsklemmen 3, 3' gelegt. Die Source-Anschlüsse der Transistoren 26, 27 sind gegen Masse geschaltet. Je ein Gate-Anschluß der Transistoren 26, 27 ist mit je einem Drain-Anschluß des jeweils anderen Transistors unter Bildung einer Kreuzkopplung verbunden. Die beiden Drain-Anschlüsse des Entdämpfungsverstärkers 25 bilden die Ausgänge 3, 3' des LC-Oszillators. Der Entdämpfungsverstärker 25 liefert einen negativen Widerstand oder eine negative Impedanz.

Um eine Selbstmischung zu vermeiden, ist die Zeitkonstante der Amplitudenregelung 5, 6, 7 sehr viel schneller auszulegen als die Zeitkonstante des Oszillators. Der mit der vorgeschlagenen Schaltung erzielbare Frequenzhub reicht von 10 KHz bis zu einigen Megahertz. Die mögliche Datenrate reicht bis zu einigen Mbit pro Sekunde.

Die Vorteile der Schaltung von Figur 2, nämlich Vermeidung unerwünschter Ladungsinjektion, Vermeidung unerwünschter Interferenzen auf die Stromversorgung der Schaltung, Implementierbarkeit auf geringer Chipfläche und einfach aufgebaute Steuerlogik 15 bleiben auch bei der Schaltung von Figur 3 erhalten.

Figur 4 zeigt anhand eines Schaubildes die Resonanzfrequenz des Quarzoszillators von Figur 2 abhängig von der Verstärkung der Amplitudenregelschleife. Das Schaubild ist dabei in einer S-Parameter-Darstellung angegeben. Dabei ist als Schar-Parameter die Schleifenverstärkung vorgesehen. Man erkennt, daß durch Variieren der Verstärkung des Amplitudenregelkreises ein Bereich von ungefähr 1800 Hertz abgedeckt werden kann. Das Schaubild belegt demnach die Funktionsfähigkeit des vorgeschlagenen Prinzips, nämlich die Durchführung einer Frequenzumtastung durch schaltbare Amplitudenregelung eines Oszillators.

Bei Einbettung des beschriebenen, abstimmbaren Oszillators in einer Phasenregelschleife (PLL) ist bevorzugt die Zeitkonstante des Reglers so ausgelegt, daß dieser nicht auf kurzfristige Frequenzänderungen, die durch die Frequenzmodulation bedingt sind, reagiert.

## Patentansprüche

1. Oszillatoranordnung für Frequenzmodulation, aufweisend
- einen Steuereingang (2) zum Zuführen eines Modulationssignals (FSK),
- einen Oszillatorausgang (3) zum Abgreifen eines frequenzmodulierten Signals,
- einen Oszillator (1) mit einem Eingang (4) zur Zuführung eines Speisestroms und mit dem Oszillatorausgang (3),
- einen Regelkreis zur Amplitudenregelung (5, 6, 7) mit einem Eingang, der an den Oszillatorausgang (3) angeschlossen ist und mit einem Ausgang, der mit dem Eingang (4) zur Zuführung eines Speisestroms des Oszillators (1) verbunden ist, und
- ein Mittel zur Beeinflussung des Speisestroms (6) in Abhängigkeit von dem Modulationssignal (FSK), das in dem Regelkreis (5, 6, 7) angeordnet und mit dem Eingang (4) des Oszillators zur Zuführung eines Speisestroms gekoppelt ist.

2. Oszillatoranordnung nach Anspruch 1,
**dadurch gekennzeichnet, daß**
das Mittel zur Beeinflussung des Speisestroms (6) mehrere, parallelgeschaltete Stromschalter (10, 11, 12, 13) umfaßt.

3. Oszillatoranordnung nach Anspruch 2,
**dadurch gekennzeichnet, daß**
die parallelgeschalteten Stromschalter (10, 11, 12, 13) ausgangsseitig in Strompfaden je eines Stromspiegels (M1, M2, M3, M4, M5) angeordnet sind.

4. Oszillatoranordnung nach Anspruch 3,
**dadurch gekennzeichnet, daß**
die Stromspiegel (M1, M2, M3, M4, M5) den Ausgang eines mit dem Oszillatorausgang (3) verbundenen Verstärkungsregelungsblocks (5) verbinden mit einem Schaltungsknoten (K) in einem weiteren Stromspiegel (7, 8), welcher ausgelegt ist zur Zuführung des Speisestroms für den Oszillator (1).

5. Oszillatoranordnung nach einem der Ansprüche 2 bis 4,
**dadurch gekennzeichnet, daß**
ein Steuerblock (15) vorgesehen ist, mit einem Eingang, der den Steuereingang (2) der Oszillatoranordnung zum Zuführen eines Modulationssignals (FSK) bildet und mit Ausgängen, die mit Steuereingängen der Stromschalter (10, 11, 12, 13) verbunden sind, ausgelegt zur Ansteuerung der Stromschalter (10, 11, 12, 13) in Abhängigkeit von dem Modulationssignal (FSK).

6. Oszillatoranordnung nach einem der Ansprüche 1 bis 5,
**dadurch gekennzeichnet, daß**
das Modulationssignal (FSK) ein gemäß einem Frequenzumtastungsverfahren digital codiertes Signal ist.

7. Oszillatoranordnung nach einem der Ansprüche 1 bis 6,
**dadurch gekennzeichnet, daß**
der Oszillator (1) als abstimmbarer Oszillator ausgeführt ist umfassend zumindest eine in Abhängigkeit von einer Abstimmspannung (V_tune) einstellbare, schwingfrequenzbestimmende Kapazität (23).

8. Oszillatoranordnung nach einem der Ansprüche 1 bis 7,
**dadurch gekennzeichnet, daß**
der Oszillator (1) ein LC-Oszillator ist umfassend wenigstens eine schwingfrequenzbestimmende Kapazität (23) und wenigstens eine schwingkreisfrequenzbestimmende Induktivität (21).

9. Oszillatoranordnung nach einem der Ansprüche 1 bis 7,
**dadurch gekennzeichnet, daß**
der Oszillator (1) ein Quarzoszillator ist mit einem schwingfrequenzbestimmenden Schwingquarz (16).

## Claims

1. Oscillator arrangement for frequency modulation, comprising
- a control input (2) for supplying a modulation signal (FSK),
- an oscillator output (3) for tapping a frequency-modulated signal,
- an oscillator (1) with an input (4) for supplying a feed current and with an oscillator output (3),
- a control circuit for amplitude control (5, 6, 7) with an input that is connected to the oscillator output (3) and with an output that is connected to the input (4) for supplying a feed current for the oscillator (1), and
- a means for influencing the feed current (6) in dependence on the modulation signal (FSK), wherein said means is arranged in the control circuit (5, 6, 7) and coupled to the input (4) of the oscillator for supplying a feed current.

2. Oscillator arrangement according to Claim 1,
**characterized in that**
the means for influencing the feed current (6) comprises several parallel-connected current switches (10, 11, 12, 13).

3. Oscillator arrangement according to Claim 2,
**characterized in that**
the parallel-connected current switches (10, 11, 12, 13) are arranged in current paths of one respective current mirror (M1, M2, M3, M4, M5) on its output side.

4. Oscillator arrangement according to Claim 3,
**characterized in that**
the current mirrors (M1, M2, M3, M4, M5) connect the output of a gain control block (5) connected to the oscillator output (3) with a circuit node (K) in another current mirror (7, 8) that is designed for supplying the feed current for the oscillator (1).

5. Oscillator arrangement according to one of Claims 2-4,
**characterized in that**
a control block (15) is provided that has an input forming the control input (2) of the oscillator arrangement for supplying a modulation signal (FSK) and outputs that are connected to the control inputs of the current switches (10, 11, 12, 13), wherein said control block is designed for controlling the current switches (10, 11, 12, 13) in dependence on the modulation signal (FSK).

6. Oscillator arrangement according to one of Claims 1-5,
**characterized in that**
the modulation signal (FSK) is a signal that is digitally coded in accordance with a frequency shift keying method.

7. Oscillator arrangement according to one of Claims 1-6,
**characterized in that**
the oscillator (1) is realized in the form of a tunable oscillator that comprises at least one capacitance (23) that can be adjusted in dependence on a tuning voltage (V_tune) and determines the oscillation frequency.

8. Oscillator arrangement according to one of Claims 1-7,
**characterized in that**
the oscillator (1) is realized in the form of an LC-oscillator that comprises at least one capacitance (23) that determines the frequency of the resonant circuit and at least one inductance (21) that determines the frequency of the resonant circuit.

9. Oscillator arrangement according to one of Claims 1-7,
**characterized in that**
the oscillator (1) is realized in the form of a crystal oscillator with an oscillator crystal (16) that determines the oscillation frequency.

## Revendications

1. Ensemble oscillateur pour la modulation de fréquence, comprenant
- une entrée (2) de commande pour l'entrée d'un signal (FSK) de modulation,
- une sortie (3) d'oscillateur pour le prélèvement d'un signal modulé en fréquence,
- un oscillateur (1) ayant une entrée (4) pour l'entrée d'un courant d'alimentation et ayant la sortie (3) d'oscillateur,
- un circuit (5, 6, 7) de régulation de l'amplitude, ayant une entrée qui est reliée à la sortie (3) de l'oscillateur et ayant une sortie qui est reliée à l'entrée (4) pour l'envoi d'un courant d'alimentation de l'oscillateur (1) et
- un moyen pour influencer le courant (6) d'alimentation en fonction du signal (FSK) de modulation, qui est monté dans le circuit (5, 6, 7) de régulation et qui est couplé à l'entrée (4) de l'oscillateur pour l'entrée d'un courant d'alimentation.

2. Ensemble oscillateur suivant la revendication 1,
**caractérisé**
**en ce que** le moyen pour influencer le courant (6) d'alimentation comprend plusieurs interrupteurs (10, 11, 12, 13) de courant montés en parallèle.

3. Ensemble oscillateur suivant la revendication 2,
**caractérisé**
**en ce que** les interrupteurs (10, 11, 12, 13) de courant montés en parallèle sont disposés du côté sortie dans des trajets de courant de, respectivement, un miroir de courant (M1, M2, M3, M4, M5).

4. Ensemble oscillateur suivant la revendication 3,
**caractérisé**
**en ce que** le miroir de courant (M1, M2, M3, M4, M5) relie la sortie d'un bloc (5) de régulation de l'amplification relié à la sortie (3) de l'oscillateur à un noeud (K) de circuit dans un autre miroir de courant (7, 8) qui est conçu pour envoyer le courant d'alimentation de l'oscillateur (1).

5. Ensemble oscillateur suivant l'une des revendications 2 à 4,
**caractérisé**
**en ce qu'**il est prévu un bloc (15) de commande ayant une entrée qui forme l'entrée (2) de commande de l'ensemble oscillateur pour l'envoi d'un signal (FSK) de modulation et ayant des sorties qui sont reliées à des entrées de commande des interrupteurs (10, 11, 12, 13) de courant, conçu pour commander les interrupteurs (10, 11, 12, 13) de courant en fonction du signal (FSK) de modulation.

6. Ensemble oscillateur suivant l'une des revendications 1 à 5,
**caractérisé**
**en ce que** le signal (FSK) de modulation est un signal codé numériquement suivant un procédé d'échantillonnage en fréquence.

7. Ensemble oscillateur suivant l'une des revendications 1 à 6,
**caractérisé**
**en ce que** l'oscillateur (1) est réalisé en oscillateur accordable comprenant au moins une capacité (23) déterminant une fréquence d'oscillation et réglable en fonction d'une tension d'accord (V_tune).

8. Ensemble oscillateur suivant l'une des revendications 1 à 7,
**caractérisé**
**en ce que** l'oscillateur est un oscillateur LC comprenant au moins une capacité (23) déterminant une fréquence d'oscillation et au moins une inductance (21) déterminant une fréquence de circuit oscillant.

9. Ensemble oscillateur suivant l'une des revendications 1 à 7,
**caractérisé**
**en ce que** l'oscillateur (1) est un oscillateur à quartz ayant un quartz (16) oscillateur déterminant une fréquence d'oscillation.
